# EUROPÄISCHE PATENTSCHRIFT

(11) **EP 1 807 191 B1**
(45) Veröffentlichungstag und Bekanntmachung des Hinweises auf die Patenterteilung: **11.01.2017**
(21) Anmeldenummer: 05782640.6
(22) Anmeldetag: 08.09.2005
(51) Int. Cl.: B01J 12/00, C01B 5/00, H01M 10/52

(54) **REKOMBINATOR**
RECOMBINER
RECOMBINEUR

(30) Priorität: 04.11.2004 EP 04026105
(43) Veröffentlichungstag der Anmeldung: 18.07.2007
(73) Patentinhaber: Hoppecke Technologies GmbH & Co. KG, 08056 Zwickau (DE)
(72) Erfinder: RIEGEL, Bernhard, 59929 Brilon (DE); RUCH, Jean, 59929 Brilon (DE); CATTANEO, Eduardo, 59929 Brilon-Rösenbeck (DE)
(74) Vertreter: Stenger Watzke Ring
(86) Internationale Anmeldenummer: PCT/EP2005/009677
(87) Internationale Veröffentlichungsnummer: WO 2006/048072

(56) Entgegenhaltungen:
- WO-A-2004/025768
- FR-A- 2 295 583
- US-A- 4 048 387

## Beschreibung

Die Erfindung betrifft einen Rekombinator mit einer Rekombinationseinrichtung zur katalytischen Rekombination von in Akkumulatoren entstehenden Wasserstoff und Sauerstoff zu Wasser, wobei der Rekominator einen Behälter aufweist.

Rekombinatoren sowie Rekombinationseinrichtungen der vorgenannten Art sind aus dem Stand der Technik an sich bekannt, beispielsweise aus der US 4,048,387 A und der FR 2,295,583 A.

Rekombinationseinrichtungen verfügen bekanntermaßen im Kernstück über einen Katalysator. Als Katalysatoren sind vor allem Platinmetalle bekannt, insbesondere Palladium, das in Form einer dünnen Schicht auf einen Trägerstab, welcher zum Beispiel aus Kupfer, Tonerde oder dergleichen bestehen kann, aufgetragen ist. Der auf diese Weise ausgebildete Katalysatorstab ist in eine Röhre aus porösem Material, beispielsweise einem gasdurchlässigen Keramikrohr zentrisch eingesetzt, wobei der in der Röhre zwischen Katalysatorstab und Röhreninnenfläche verbleibende freie Ringraum mit einem Absorptionsmaterial befüllt ist. Als Absorptionsmaterial kommen insbesondere Bleioxyde, Silberoxyde, Eisenoxyde, Kupferoxyde oder dergleichen in Betracht. Die den Katalysatorstab und das Absorptionsmaterial aufnehmende Röhre ist in aller Regel freistehend innerhalb eines aus einem gasdichten Material bestehenden Behälters, vorzugsweise eines Kunststoffbehälters, angeordnet, welcher Behälter an den Stirnseiten verschlossen ist. Der Behälter verfügt seinerseits über Rohrstutzen zum Anschluß an einen Akkumulator für die Gaszufuhr einerseits und den Wasserablauf andererseits. Mit seinen Anbauteilen bildet der Behälter zusammen mit der Rekombinationseinrichtung den Rekombinator aus.

Die bei einem Betrieb eines Akkumulators, insbesondere während eines Ladevorganges, entstehenden Gase Wasserstoff und Sauerstoff werden über den einen Rohrstutzen des Behälters in den Behälter geführt, passieren dort die poröse Röhre und das Absorptionsmaterial und werden alsdann am Katalysator zu Wasser rekombiniert. Die Rekombinationsreaktion ist exotherm, weshalb das am Katalysator rekombinierte Wasser in Form von Wasserdampf vorliegt. Der am Katalysator entstehende Wasserdampf schlägt sich alsdann an der Behälterinnenwandung nieder, kondensiert und fließt über den hierfür vorgesehenen Rohrstutzen zurück in den Akkumulator.

Der mit der Verwendung eines Rekombinators der vorbeschriebenen Art einhergehende Vorteil liegt auf der Hand. Die bei einem Akkumulatorbetrieb frei werdenden Gase Wasserstoff und Sauerstoff werden durch den Rekombinator zu Wasser rekombiniert, welches Wasser für den Akkumulator nicht verloren geht, sondern in den Elektrolyten des Akkumulators zurückgeführt wird. Es ist daher nicht erforderlich, destilliertes Wasser in den Elektrolyten des Akkumulators nachzufüllen. Insofern erweist sich ein je nach seiner Größe mit einem oder mehreren Rekombinatoren versehener Akkumulator als wartungsfrei.

Je nach Bauform und Baugröße des Akkumulators bzw. in Abhängigkeit des zur Verfügung stehenden Platzangebotes kann der Rekombinator entweder senkrecht oder längs zur Akkumulatoroberseite ausgerichtet ausgebildet sein. Von Nachteil bei den vorbekannten Rekombinatoren ist, daß der oberhalb der Rekombinationseinrichtung an der Behälterinnenwand des Rekombinators kondensierende Wasserdampf Wassertropfen ausbildet, die der Schwerkraft folgend auf die Rekombinationseinrichtung abtropfen können. Hierdurch bedingt kann es zu einer Durchnässung der Rekombinationseinrichtung kommen, was in nachteiliger Weise zu einer Verminderung der Rekombinationsleistung der Rekombinationseinrichtung führt: Die Rekombinationsleistung wird zum einen dadurch vermindert, daß das den Katalysator und das Absorptionsmaterial umgebende poröse Material, welches beispielsweise aus Keramik besteht, verstopft. Die zu rekombinierenden Gase können nicht mehr ungehindert an den

Katalysatorstab gelangen. Zudem kann es infolge des Heruntertropfens von sich an der Behälterinnenoberfläche bildenden Wassertropfen zu einer Durchnässung des Absorptionsmaterials kommen, was zu einem partiellen Funktionsausfall-desselben führen kann. Auch insofern erweist sich die vorbeschriebene Anordnung als nachteilig.

Ausgehend vom vorgenannten Stand der Technik ist es **Aufgabe** der Erfindung, einen Rekombinator dahingehend weiterzubilden, daß es nicht infolge des Abtropfens von an der Behälterinnenwand des Rekombinators auskondensiertem Wasser zu einer Durchnässung der Rekombinationseinrichtung kommt.

Zur **Lösung** dieser Aufgabe wird mit der Erfindung vorgeschlagen ein Rekombinator der eingangs genannten Art, der gekennzeichnet ist durch ein oberhalb der Rekombinationseinrichtung angeordnetes Abschirmelement, welches so zwischen der Rekombinationseinrichtung und der in Höhenrichtung darüber liegenden Behälterwand angeordnet ist, dass sich an der Behälterwand ausbildendes Wasser von dem Abschirmelement abgefangen wird.

Das erfindungsgemäße oberhalb der Rekombinationseinrichtung angeordnete Abschirmelement schützt die Rekombinationseinrichtung vor sich au der Behälterinnenwand ausbildenden und in Richtung auf die Rekombinationseinrichtung herabfallenden Wassertropfen. Eine ungewollte Durchnässung der Rekombinationseinrichtung durch herabfallende Wassertropfen kann so wirkungsvoll unterbunden werden.

Die vorbeschriebene Konstruktion eignet sich insbesondere für längs, das heißt parallel zur Oberseite des Akkumulators ausgerichtete Rekombinatoren, das heißt für solche Rekombinatoren, die nicht senkrecht zur Akkumulatoroberseite ausgerichtet angeordnet sind. Das Abschirmelement ist bei solchen längs ausgerichteten Rekombinatoren zwischen der Rekombinationseinrichtung und der darüber liegenden Behälterwand angeordnet. Anders als bei aus dem Stand der Technik bekannten Rekombinatoren tropft das sich an der Behälterinnenwand oberhalb der Rekombinationseinrichtung ausbildende Wasser nicht auf die Rekombinationseinrichtung zurück, sondern wird vielmehr von dem zwischen Rekombinationseinrichtung und Behälterwand angeordneten Abschirmelement abgefangen. Das vom Abschirmelement abgefangene Wasser wird von diesem um die Rekombinationseinrichtung herum abgeleitet und tropft von diesem - ohne daß die Gefahr einer Durchnässung der Rekombinationseinrichtung bestünde - ab. Das Abschirmelement wirkt insofern als eine Art Schutzhaube für die Rekombinationseinrichtung. Dabei ist die erfindungsgemäße Ausgestaltung nicht nur für längs ausgerichtete Rekombinationseinrichtungen von Vorteil.

Das Abschirmelement ist aus einem korrosionsbeständigen Material gebildet und kann beispielsweise aus Keramik oder Kunststoff bestehen. Als Kunststoff kommt insbesondere ein hydrophobisierter, das heißt wasserabweisender Kunststoff in Frage, beispielsweise ein Elastomer. Das Abschirmelement verfügt optional über Durchtrittsöffnungen für den Wasserdampf, wobei die Durchtrittsöffnungen derart ausgestaltet bzw. dimensioniert sein können, daß das auf das Abschirmelement zurücktropfende Wasser nicht durch die Durchtrittsöffnungen hindurchtreten und zu der unterhalb des Abschirmelements angeordneten Rekombinationseinrichtung gelangen kann. Im Rahmen der Erfindung kann das Dachelement als Membran ausgebildet sein. In diesem Zusammenhang ist beispielsweise vorstellbar, daß das Abschirmelement aus einem porösen Keramikmaterial gebildet ist, das einerseits den an der Rekombinationseinheit entstehenden Wasserdampf durchläßt, andererseits aber von dem von der Behälterwand abtropfenden Wasser nicht passiert werden kann. In Ergänzung hierzu oder alternativ kann vorgesehen sein, daß das Abschirmelement auf seiner der Rekombinationseinrichtung abgewandten Seite mit einem Vliesmaterial bedeckt ist. Das Vliesmaterial sorgt in der schon vorbeschriebenen Weise dafür, daß der an der Rekombinationseinrichtung entstehende Wasserdampf das Abschirmelement bzw. das darauf angeordnete Vliesmaterial in Richtung der Behälterwand passieren kann, daß jedoch das von der Behälterwand zurück abtropfende Wasser vom Abschirmelement bzw. dem darauf angeordneten Vliesmaterial mit der Folge zurückgehalten wird, daß die Rekombinationseinrichtung vor einer ungewollten Durchnässung durch herabtropfendes Wasser geschützt ist.

Der von der Rekombinationseinheit bewirkte Rekombinationsprozeß verläuft exotherm. Um sicherzustellen, daß es infolge dieses exothermen Rekombinationsprozesses nicht zu einer ungewollten Entzündung des im Behälter des Rekombinators vorhandenen Wasserstoff-Sauerstoff-Gasgemisches (Knallgas) kommt, ist der Katalysator der Rekombinationseinheit von einem Absorptionsmaterial umgeben. Dieses Absorptionsmaterial, das den Schutz des Katalysators vor Vergiftung übernimmt, verhindert ebenfalls den unkontrollierten Kontakt zwischen Katalysator einerseits und Knallgasgemisch andererseits. Einer ungewollten Entzündung bzw. Explosion des Knallgasgemisches kann so sicher vorgebeugt werden. Gleichwohl ist der Einsatz eines aus Absorptionsmaterial bestehenden Absorbers nicht frei von Nachteilen. Dieser wird nämlich durch das im Rahmen des Rekombinationsprozesses frei werdende, rekombinierte Wasser durchnäßt, insbesondere dann, wenn das an der Behälterwand auskondensierte Wasser auf die Rekombinationseinheit abtropft. Eine Durchnässung des Absorptionsmaterials bewirkt aus zweierlei Gründen eine ungewollte Verlangsamung des Rekombinationsprozesses. Zum einen stellt das vom Absorptionsmaterial aufgenommene Wasser eine Barriere für das zu rekombinierende Wasserstoff-Sauerstoff-Gasgemisch dar. Dieses muß nämlich, um zwecks Rekombination den Katalysator bestimmungsgemäß zu erreichen, durch das vom Absorptionsmaterial aufgenommene Wasser hindurchdiffundieren. Der Vorgang des Hindurchdiffundierens ist äußerst zeitintensiv und damit langwierig, so daß die Rekombinationsleistung der gesamten Rekombinationseinrichtung bei durchnäßtem Absorptionsmaterial in nachteiliger Weise verringert wird. Zum anderen muß das das Absorptionsmaterial durchnässende Wasser erneut verdampft werden. Auch dieser Umstand führt dazu, daß die Rekombinationsleistung der gesamten Rekombinationseinheit in nachteiliger Weise vermindert wird. Die erfindungsgemäße Vorrichtung schafft hier Abhilfe. Durch das Abschirmelement wird nämlich sichergestellt, daß das an der Behälterwand auskondensierende Wasser nicht zurück auf die Rekombinationseinheit tropft und das Absorptionsmaterial durchnäßt. Das Abschirmelement schützt die Rekombinationseinheit vielmehr vor einer Durchnässung durch zurückabtropfendes Wasser, so daß das Absorptionsmaterial vergleichsweise trocken gehalten werden kann. Im Unterschied zu den aus dem Stand der Technik bekannten Rekombinatoren wird die Rekombinationsleistung des erfindungsgemäßen Rekombinators also nicht dadurch beeinträchtigt, daß das Absorptionsmaterial durch herabtropfendes, bereits rekombiniertes Wasser durchnäßt wird. Mit dem erfindungsgemäßen Abschirmelement kann das rekombinierte Wasser von der Rekombinationseinheit weitestgehend ferngehalten werden.

Um einen weitestgehenden Schutz der Rekombinationseinrichtung vor herabtropfendem Wasser sicherzustellen, weist das Abschirmelement, insbesondere bei einer längs ausgerichteten Rekombinationseinrichtung gemäß einem weiteren Merkmal der Erfindung eine solche Längserstreckung auf, die im wesentlichen der der Rekombinationseinrichtung entspricht. Vorzugsweise wird die Rekombinationseinrichtung über ihre gesamte Längserstreckung vom Abschirmelement überdeckt.

Das Abschirmelement weist gemäß einem weiteren Merkmal der Erfindung eine im Querschnitt bogenförmige Kontur auf. Die bogenförmige Kontur kann im Querschnitt teilkreisförmig ausgebildet und damit an den Querschnitt des vorzugsweise zylinderförmig ausgebildeten Behälter des Rekombinators angepaßt sein. Unabhängig von der im Einzelfall zu wählenden Kontur des Abschirmelements kommt es aber allein darauf an, daß das Abschirmelement die Rekombinationseinrichtung nach Art eines Daches abdeckt, so daß die Rekombinationseinrichtung vor herabtropfendem Wasser geschützt ist. Die bogenförmige Ausgestaltungsform des Abschirmelements eignet sich insbesondere dann, wenn die Rekombinationseinrichtung, wie aus dem Stand der Technik an sich bekannt, stabförmig ausgebildet ist. Die Längsseiten des Abschirmelementes überragen die Rekombinationseinrichtung insoweit, als daß das vom Abschirmelement abgefangene Wasser in den Längsseiten des Abschirmelements seine von der Rekombinationseinrichtung weit genug entfernt liegenden Abtropfkanten findet. Dabei können die Längsseiten des Abschirmelements gemäß einem weiteren Merkmal der Erfindung jeweils einen eine Wassersammelrinne bildenden Fortsatz tragen. Das vom Abschirmelement abgefangene Wasser sammelt sich gemäß dieser Ausgestaltungsform der Erfindung in den längsseitig am Abschirmelement angeordneten Wassersammelrinnen, über welche es abtransportiert werden kann. Um einen solchen Abtransport des in den Wassersammelrinnen aufgefangenen Wassers zu erleichtern, kann das Abschirmelement unter Gefälle zur Horizontalen ausgerichtet sein. Der Schwerkraft folgend fließt das in den Wassersammelrinnen angesammelte Wasser dann in Richtung des abfallenden Gefälles ab.

Gemäß einem weiteren Merkmal der Erfindung kann vorgesehen sein, daß die Rekombinationseinrichtung, insbesondere das den Katalysator umgebende Absorptionsmaterial beheizbar ist. Sich am Absorptionsmaterial unter Umständen ansammelndes Wasser kann so in Wasserdampf zurückgewandelt, das heißt reaktiviert werden. Auf diese Weise ist sichergestellt, daß auch eine beispielsweise durch Wasserdampf bewirkte Durchnässung des Absorptionsmaterials verhindert werden kann. Alternativ zur Beheizung der Rekombinationseinrichtung kann auch vorgesehen sein, daß der vom Behälter des Rekombinators umgebende Volumenraum beheizbar ist. Auch auf diese Weise läßt sich vom Absorptionsmaterial unter Umständen aufgenommenes Wasser in Wasserdampf zurückverwandeln, das heißt reaktivieren. Gemäß einem besonderen Merkmal der Erfindung kann das Abschirmelement als Träger für eine entsprechende Heizeinrichtung dienen. Auch kann vorgesehen sein, daß das Abschirmelement selbst als Heizeinrichtung ausgebildet ist. Vorstellbar in diesem Zusammenhang ist beispielsweise, daß als Heizeinrichtung eine Widerstandsheizeinrichtung eingesetzt wird, die nach Art einer Folie ausgebildet und auf das Abschirmelement aufgeklebt ist. Bei Bedarf kann die Heizeinrichtung eingeschaltet und dazu benutzt werden, den vom Behälter des Rekombinators umschlossenen Volumenraum aufzuheizen. Die Einschaltung der Heizeinrichtung kann gemäß einem weiteren Merkmal der Erfindung auch automatisch erfolgen. Dies könnte beispielsweise durch eine einen Sensor umfassende Steuereinrichtung bewerkstelligt werden, wobei als Sensor beispielsweise ein Feuchtigkeitssensor, ein Temperatursensor oder ein Drucksensor in Frage kommt. Da nämlich der Rekombinationsprozeß exotherm abläuft, können neben der Feuchtigkeit auch die Parameter Temperatur und/oder Druck darüber Aufschluß geben, wie sich der momentan ablaufende Rekombinationsprozeß darstellt, bzw. ob die bezüglich eines wunschgemäß zu erreichenden Rekombinationsprozesses einzuhaltenden Sollparameter erreicht werden oder nicht. Falls nein, kann über die Steuer- bzw. Regeleinrichtung ein Einschalten der Heizeinrichtung automatisch bewirkt werden. Sobald über den vorgesehenen Sensor erfaßt, die wunschgemäß zu erzielenden Prozeßparameter erreicht sind, kann über die Steuer- bzw. Regeleinrichtung die Heizeinrichtung automatisch wieder abgeschaltet werden.

Die erfindungsgemäße Verwendung eines Dachelements eignet sich natürlich nicht nur für längs ausgerichtete Rekombinationseinrichtungen, sondern auch für solche Rekombinationseinrichtungen, die in ihrer Längserstreckung senkrecht oder im wesentlichen senkrecht zur Akkumulatoroberfläche angeordnet sind. Auch bei einer senkrechten Ausrichtung der Rekombinationseinrichtung ist das Dachelement mit Bezug auf die Höhenrichtung des Rekombinators oberhalb der Rekombinationseinrichtung angeordnet. Dabei kann entweder vorgesehen sein, daß die Rekombinationseinrichtung das Dachelement, das heißt das Abschirmelement trägt, oder daß das Abschirmelement nicht an der Rekombinationseinrichtung, sondern am Behälter des Rekombinators angeordnet, das heißt befestigt ist. Die Anordnung des Abschirmelements entweder an der Rekombinationseinrichtung oder am Behälter des Rekombinators kann sowohl bei einer senkrechten als auch bei einer horizontalen Ausrichtung der Rekombinationseinrichtung je nach Anwendungsfall gewählt werden.

Bei einer senkrechten Ausrichtung der Rekombinationseinrichtung ist es bevorzugt, daß die Rekombinationseinrichtung das Abschirmelement trägt. Zu diesem Zweck kann das Abschirmelement über einen Halter verfügen, mittels dem das Abschirmelement an der Rekombinationseinrichtung angeordnet werden kann. Im Falle einer stabförmig ausgebildeten Rekombinationseinrichtung ist der Halter vorzugsweise nach Art einer Kappe ausgebildet, der oberendseitig der Rekombinationseinrichtung auf diese aufgesteckt wird. Die als Halter fungierende Kappe trägt dann ihrerseits das Abschirmelement. Die Ausgestaltung des das Abschirmelement tragenden Halters als Kappe hat den Vorteil einer positionsgenauen und lagesicheren Anordnung des Abschirmelements an der Rekombinationseinrichtung.

Die Rekombinationseinrichtung wird gemäß einem weiteren Merkmal der Erfindung von wenigstens einer im Rekombinator angeordneten Halteeinrichtung getragen. Insbesondere bei einer senkrecht ausgerichteten Rekombinationseinrichtung ist es von Vorteil, wenn die Halteeinrichtung über Mittel zum Abführen von Wasser verfügt. Derlei Mittel zum Abführen von Wasser können beispielsweise Durchtrittsöffnungen sein.

Insbesondere bei senkrecht ausgerichteten Rekombinationseinrichtungen besteht die Gefahr, daß das dem Abschirmelement gegenüberliegende Ende der Rekombinationseinrichtung dadurch mit Wasser in Kontakt kommt, daß sich im Rekombinator infolge der Rekombination Wasser ausbildet, welches auf die Halteeinrichtung abtropft und von dort aus das dem Abschirmelement gegenüberliegende Ende der Rekombinationseinrichtung durchnäßt. Zudem besteht die Gefahr, daß sich rekombiniertes Wasser am Boden des Rekombinators ansammelt, wodurch es ebenfalls zu einer Durchnässung der Rekombinationseinrichtung an dem dem Abschirmelement gegenüberliegenden Ende der Rekombinationseinrichtung kommen kann. Die erfindungsgemäß mit Mitteln zum Abführen von Wasser ausgebildete Halteeinrichtung für die Rekombinationseinrichtung schafft hier Abhilfe. So kann auf die Halteeinrichtung abtropfendes Wasser abgeführt werden. Darüber hinaus ermöglicht es die Halteeinrichtung, das dem Abschirmelement gegenüberliegende Ende der Rekombinationseinrichtung oberhalb des Flüssigkeitsspiegels des sich im Rekombinator ansammelnden Wassers zu positionieren, so daß bodenseitig im Rekombinator befindliches Wasser das dem Abschirmelement gegenüberliegende Ende der Rekombinationseinrichtung nicht durchnässen kann. Die erfindungsgemäße Halteeinrichtung erfüllt insofern zwei Funktionen. Zum einen wird die Rekombinationseinrichtung mit ihrem dem Abschirmelement gegenüberliegenden Ende in einem gewissen Abstand zum Boden des Rekombinators positioniert, zum anderen sorgt die erfindungsgemäße Ausgestaltung der Halteeinrichtung dafür, daß auf die Halteeinrichtung abtropfendes Wasser abgeführt wird, so daß die Gefahr, daß das dem Abschirmelement gegenüberliegende Ende der Rekombinationseinrichtung durchnäßt, gebannt ist.

Gemäß einem weiteren Merkmal der Erfindung ist vorgesehen, daß die Halteeinrichtung aus einem hydrophoben Material, vorzugsweise Kunststoff besteht. Auch diese Maßnahme dient dazu, die Rekombinationseinrichtung vor einer ungewollten Durchnässung zu schützen.

Weitere Vorteile und Merkmale der Erfindung ergeben sich aus der Beschreibung anhand der nachfolgenden Figuren. Dabei zeigen:
- Fig. 1: in schematischer Seitenansicht einen Rekombinator in einer ersten Ausführungsform gemäß der Erfindung,
- Fig. 2: in einer schematischen Schnittdarstellung den erfindungsgemäßen Rekombinator nach Fig. 1, und zwar entlang der Schnittlinie II-II,
- Fig. 3: in schematischer Seitenansicht einen Rekombinator in einer zweiten Ausführungsform der Erfindung,
- Fig. 4: in einer Schnittdarstellung den Rekombinator entlang der Schnittlinie IV-IV nach Fig. 3,
- Fig. 5: in einer schematischen Darstellung die Halteeinrichtung der Rekombinationseinrichtung in einer ersten Ausführungsform,
- Fig. 6: in einer schematischen Darstellung die Halteeinrichtung der Rekombinationseinrichtung in einer zweiten Ausführungsform und
- Fig. 7: in einer schematischen Darstellung die Halteeinrichtung der Rekombinationseinrichtung in einer dritten Ausführungsform.

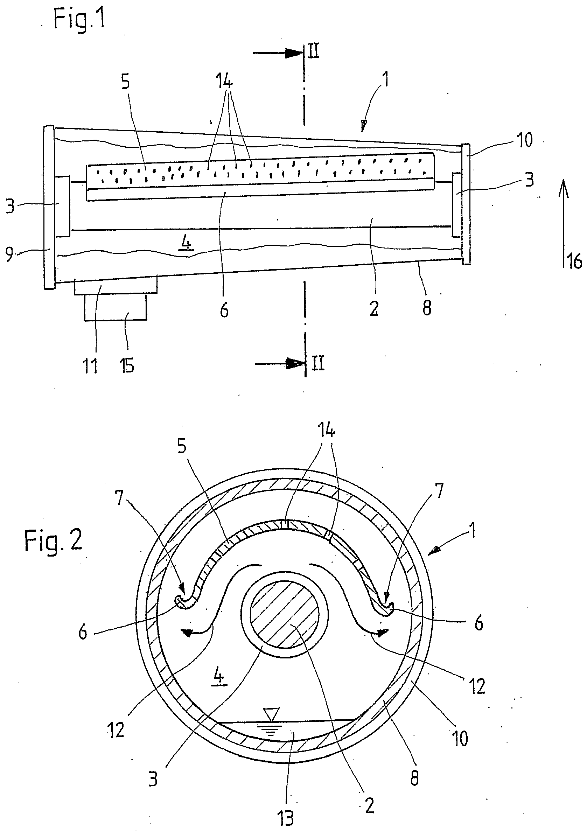

Fig. 1 zeigt den erfindungsgemäßen Rekombinator 1 in einer teilgeschnittenen Seitenansicht. Der Rekombinator 1 besteht in an sich bekannter Weise aus einem Anschlußstutzen 15, einem in Höhenrichtung 16 darüber liegenden Stutzenelement 11 sowie einem aus einem gasdichten Material bestehenden Behälter 8. Am Anschlußstutzen 15 können in der Fig. nicht dargestellte Nocken angeformt sein, um in einer Art einer Bajonettverbindung den Rekombinator 1 an der Zellenöffnung eines in der Fig. nicht gezeigten Akkumulators anzuordnen. Zwecks Anordnung an einem Akkumulator kann zudem ein in der Fig. nicht dargestellter Aufsetzflansch zwischen Anschlußstutzen 15 einerseits und Stutzenelement 11 andererseits angeordnet sein. Der Anschlußstutzen 15 kann zudem eine in der Fig. nicht dargestellte Dichtung tragen.

Innerhalb des vom Behälter 8 umschlossenen Volumenraums 4 ist eine stabförmig ausgebildete Rekombinationseinrichtung 2 angeordnet. Getragen wird die Rekombinationseinrichtung 2 von zwei Sockeln 3, die die Rekombinationseinrichtung 2 in Bezug auf die Blattebene nach Fig. 1 links- und rechtsseitig aufnehmen. Die Sockel 3 können beispielsweise als Rohrstutzen ausgebildet sein, in die die Rekombinationseinrichtung 2 lagesicher eingeführt werden kann. Der in Blattebene nach Fig. 1 linke Sockel 3 wird von einer Verschlußkappe 9 getragen, die den Behälter 8 linksseitig verschließt. In gleicher Weise ist der in Blattebene rechte Sockel 3 an der Verschlußkappe 10 angeordnet, die den Behälter 8 verschließt.

Die Verschlußkappe 9 und der Behälter 8 sind vorzugsweise als einstückiges Bauteil ausgebildet und bestehen aus Kunststoff. Nach einem Einbringen der Rekombinationseinrichtung 2 in den von der Verschlußkappe 9 getragenen Sockel 3 wird der Behälter 8 anderendseitig mittels der Verschlußkappe 10 verschlossen, wobei der in Blattebene rechte Abschnitt der Rekombinationseinrichtung 2 in den Stutzen 3 der Verschlußkappe 10 zu liegen kommt. Für eine sichere Festlegung der Verschlußkappe 10 gegenüber dem Behälter 8 können entweder am Behälter 8 oder an der Verschlußkappe 10 entsprechende Verriegelungs- und/oder Rastmittel vorgesehen sein.

Der Rekombinator 1 kann zudem über eine in den Fign. nicht dargestellte Überdruckleitung, bzw. über einen Überdruckkanal verfügen. Eine solche Überdruckleitung bzw. ein solcher Überdruckkanal dient dazu, einen etwaig im Rekombinator 1 entstehenden Überdruck dadurch abzubauen, daß das im Rekombinator 1 befindliche Gasgemisch zum Teil an die den Akkumulator umgebende Atmosphäre abgegeben wird. Zur Zündsicherung kann der Rekombinator 1 über eine Zündrückschlagsicherung, beispielsweise in Form einer Fritte oder eines Ventils verfügen. Eine solche Fritte bzw. ein solches Ventil ist in dem Überdruckkanal bzw. der Überdruckleitung anzuordnen und sorgt dafür, daß eine etwaige Entzündung des an die den Akkumulator umgebende Atmosphäre abgegebenen Knallgasgemisches nicht auf den Rekombinator 1 oder den Akkumulator zurückschlägt.

Wie Fig. 1 deutlich zu erkennen läßt, ist der Rekombinator 1 und damit die innerhalb des Behälters 8 angeordnete Rekombinationseinrichtung 2 längs, das heißt parallel verlaufend zu einem in der Fig. nicht dargestellten Akkumulator ausgerichtet. Die über den Anschlußstutzen 15 in den Volumenraum 4 des Rekombinators 1 gelangenden Gase Wasserstoff und Sauerstoff werden mittels der Rekombinationseinrichtung 2 in an sich bekannter Weise zu Wasser rekombiniert. Im Rahmen des Rekombinationsvorganges bildet sich am Katalysator der Rekombinationseinheit 2 Wasserdampf aus, der sich nahezu gleichmäßig innerhalb des Volumenraums 4 verteilt und nach Abkühlung an der Behälterinnenwand zu Wasser auskondensiert. Dabei bilden sich auch an der in Höhenrichtung 16 direkt oberhalb der Rekombinationseinrichtung 2 angeordneten Behälterwand Wassertropfen aus, die der Schwerkraft folgend in Richtung der Rekombinationseinrichtung 2 abtropfen. Um zu verhindern, daß die Rekombinationseinrichtung 2 durch herabfallende Wassertropfen durchnäßt wird, ist erfindungsgemäß in Höhenrichtung 16 oberhalb der Rekombinationseinrichtung 2 ein Abschirmelement 5 angeordnet. Dieses Abschirmelement 5 sorgt dafür, daß an der Innenoberseite des Behälters 8 auskondensiertes Wasser nicht zurück auf die Rekombinationseinrichtung 2 tropft, sondern vielmehr vom Abschirmelement 5 abgefangen und um die Rekombinationseinrichtung 2 herum geführt wird.

Das Abschirmelement 5 besteht aus einem korrosionsbeständigen Material, beispielsweise Kunststoff oder Keramik, und weist beispielhaft die in Fig. 2 gezeigte Querschnittskontur auf.

Gemäß der beispielhaften Ausgestaltungsform nach Fig. 2 ist das Abschirmelement 5 im Querschnitt bogenförmig ausgebildet. Mit Bezug auf das von der Behälterinnenoberfläche abtropfende Wasser überdeckt das Abschirmelement 5 die Rekombinationseinrichtung 2 vollständig, wie anhand von Fig. 2 gut zu erkennen ist. Das vom Abschirmelement 5 aufgefangene Wasser perlt an diesem ab und wird in Richtung der Längsseiten des Abschirmelements 5 befördert, von wo aus es abtropfen kann. Das sich innerhalb des Behälters 8 ansammelnde Wasser ist in Fig. 2 beispielhaft mit dem Bezugszeichen 13 identifiziert.

Optional können die Längsseiten des Abschirmelements 5, wie in Fig. 2 dargestellt, Fortsätze 6 tragen, die eine Wassersammelrinne 7 ausbilden. Das Abschirmelement 5 ist, wie Fig. 1 zeigt, zur Horizontalen geneigt ausgebildet, so daß das vom Abschirmelement insbesondere in den Wasserrinnen 7 aufgenommene Wasser in Richtung des Anschlußstutzens 15 abgeführt wird.

Der an der Rekombinationseinrichtung 2 infolge der Rekombination von Wasserstoff und Sauerstoff entstehende Wasserdampf strömt, wie beispielhaft in Fig. 2 anhand der Pfeile 12 dargestellt, um das Abschirmelement 5 herum und gelangt so an die Behälterinnenwand, wo der Wasserdampf zu Wasser kondensiert. In diesem Zusammenhang kann gemäß einem optionalen Vorschlag der Erfindung vorgesehen sein, daß das Abschirmelement 5 über Durchtrittsöffnungen 14 verfügt. Diese Durchtrittsöffnungen 14 sind nach Art und Größe derart ausgebildet, daß sie zwar den an der Rekombinationseinrichtung 2 freiwerdenden Wasserdampf durchlassen, das auf das Abschirmelement 5 zurücktropfende Wasser durch sie jedoch nicht hindurchströmen kann. Durch diese Ausgestaltung ist sichergestellt, daß der an der Rekombinationseinrichtung entstehende Wasserdampf in Höhenrichtung 16 direkt abgeführt und das Abschirmelement 5 durchströmen kann. Das auf das Abschirmelement 5 zurücktropfende Wasser kann die Durchtrittsöffnungen 14 hingegen nicht passieren, so daß das Abschirmelement 5 die Rekombinationseinrichtung 2 wirksam vor einer ungewollten Durchnässung schützt. In Kombination oder alternativ zu dieser Ausgestaltungsform kann vorgesehen sein, daß das Abschirmelement 5 auf seiner der Rekombinationseinrichtung abgewandten Oberseite mit einem wasserdampfdurchlässigen Material, beispielsweise einem Vliesmaterial, bestückt ist. In schon vorbeschriebener Weise sorgt auch das Vliesmaterial dafür, daß auf das Abschirmelement 5 zurücktropfendes Wasser von diesem aufgenommen bzw. abgeleitet wird. Wasserdampf kann das Vliesmaterial hingegen durchströmen, so daß es nicht zu einer ungewollten Kondensation des Wasserdampfs auf der der Rekombinationseinrichtung 2 zugewandten Unterseite des Abschirmelements 5 kommt. Alternativ zur Verwendung eines Vliesmaterials kann das Dachelement auch als Membran ausgebildet sein. Als Material für eine solche Membran eignet sich beispielsweise Sympatex, das dampfdurchlässig, aber flüssigkeitsundurchlässig ist.

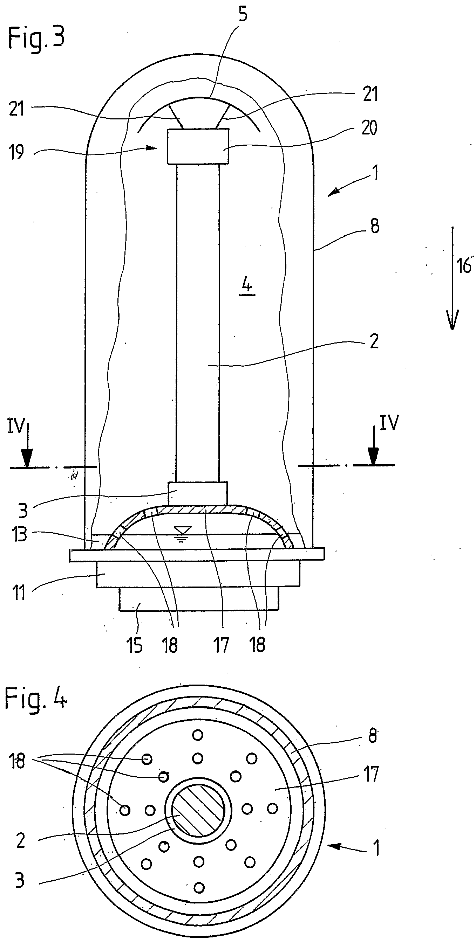

Fig. 3 zeigt in einer schematischen Seitenansicht den erfindungsgemäßen Rekombinator in einer zweiten Ausführungsform. Im Unterschied zur Ausgestaltungsform nach den Fign. 1 und 2 zeigt die Fig. 3 einen Rekombinator 1 mit einer Rekombinationseinrichtung 2, die nicht längs, sondern senkrecht zur Akkumulatoroberfläche eines in Fig. 3 nicht gezeigten Akkumulators ausgerichtet ist. Wie aus Fig. 3 zu erkennen ist, befindet sich in Höhenrichtung 16 oberhalb der Rekombinationseinrichtung 2 ein Abschirmelement 5. Dieses Abschirmelement 5 schützt die Rekombinationseinrichtung 2, wie vorstehend schon anhand der Fign. 1 und 2 beschrieben, vor herabtropfendem Wasser. Eine ungewollte Durchnässung der Rekombinationseinrichtung 2 durch an der Innenwand des Behälters 8 auskondensierendes und abtropfendes Wasser ist somit auch bei der Ausgestaltungsform nach Fig. 3 sicher unterbunden.

In der Ausgestaltungsform nach Fig. 3 trägt die Rekombinationseinrichtung 2 das Abschirmelement 5. Zu diesem Zweck ist auf die Rekombinationseinrichtung 2 ein Halter 19 aufgesetzt, der seinerseits das Abschirmelement 5 trägt. Der Halter 19 besteht aus einer Kappe 20 und daran angeordneten Stegen 21, die die Kappe 20 mit dem Abschirmelement 5 verbinden. Dabei sind das Abschirmelement 5 und der Halter 19 vorzugsweise als einstückiges Bauteil ausgebildet.

Wie Fig. 3 des weiteren erkennen läßt, ist die Kappe 20 des Halters 19 nach Art eines einseitig geschlossenen Rohres ausgebildet, dessen Innendurchmesser dem Außendurchmesser der stabförmig ausgebildeten Rekombinationseinrichtung 2 entspricht. Die Kappe 20 kann also nach Art eines Deckels auf die Rekombinationseinrichtung 2 aufgesteckt werden, wobei die Kappe 20 in Höhenrichtung 16 eine solche Längserstreckung aufweist, daß die Kappe 20 lagesicher an der Rekombinationseinrichtung 2 angeordnet werden kann. Der Innendurchmesser der Kappe ist auf den Außendurchmesser der Rekombinationseinrichtung 2 paßgenau abgestimmt, so daß die Kappe 20 und damit auch das daran angeordnete Abschirmelement 5 nicht ungewollt von der Rekombinationseinrichtung 2 herunterfällt, und zwar auch dann nicht, wenn der den Rekombinator 1 tragende Akkumulator zur Horizontalen geneigt oder sogar auf den Kopf gestellt wird. Für eine zusätzliche Fixierung des Halters 19 an der Rekombinationseinrichtung 2 kann zudem vorgesehen sein, die Kappe 20 mit der Rekombinationseinrichtung 2 zu verkleben.

Die Rekombinationseinrichtung 2 wird ihrerseits von einer Halteeinrichtung 17 getragen, wie Fig. 3 erkennen läßt. Die Halteeinrichtung 17 verfügt oberseitig über einen Sockel 3, in den die Rekombinationseinrichtung 2 eingesteckt werden kann. Für eine zusätzliche Lagefixierung kann die Rekombinationseinrichtung in den Sockel 3 eingeklebt sein.

Die den Sockel 3 tragende Halteeinrichtung 17 ist derart ausgestaltet, daß das dem Abschirmelement 5 gegenüberliegende Ende der Rekombinationseinrichtung 2 oberhalb des Wasserspiegels des sich im Rekombinator 1 ansammelnden Wassers 13 gelegen ist. Hierdurch ist sichergestellt, daß das Wasser 13, welches sich innerhalb des Rekombinators 1 ansammeln kann, nicht zu einer Durchnässung des dem Abschirmelement 5 gegenüberliegenden Ende der Rekombinationseinrichtung 2 führt.

Infolge eines Rekombinationsprozesses kann es dazu kommen, daß an der Innenwand des Behälters 8 auskondensierendes Wasser auf die Halteeinrichtung 17 abtropft. Um zu verhindern, daß es durch das auf die Halteeinrichtung 17 abtropfende Wasser zu einer endseitigen Durchnässung der Rekombinationseinrichtung kommt, verfügt die Halteeinrichtung 17 erfindungsgemäß über Mittel zum Abführen von Wasser. In der Ausgestaltungsform nach Fig. 3 sind diese Mittel in Form von Durchtrittsöffnungen 18 ausgebildet, durch die auf die Halteeinrichtung 17 abtropfendes Wasser hindurch in Richtung auf das Stutzenelement 11 des Rekombinators 1 fließen kann. Die Anordnung solcher Durchtrittsöffnungen 18, die besonders deutlich Fig. 4 entnommen werden können, sorgen also dafür, daß sich auf der Halteeinrichtung 17 kein Wasser ansammeln kann. Um diesen Effekt zusätzlich zu verstärken, kann gemäß einem weiteren Merkmal der Erfindung vorgesehen sein, daß die Halteeinrichtung 17 aus einem hydrophoben Material besteht.

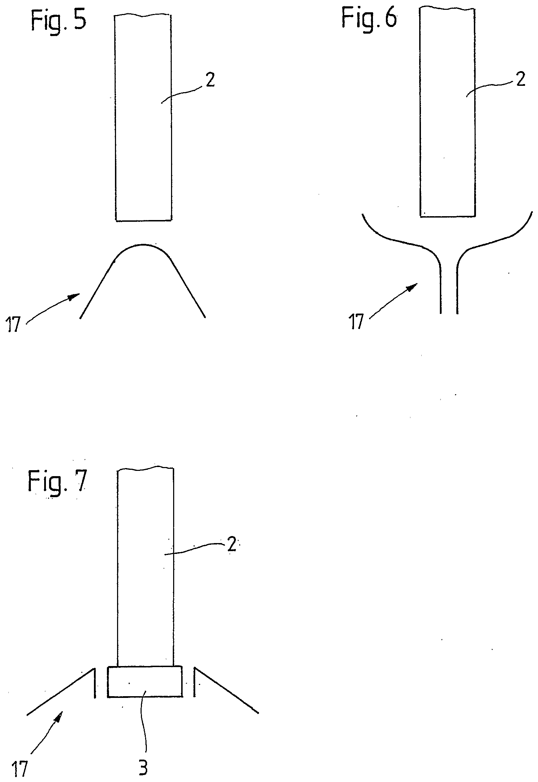

Die Fign. 5 bis 7 zeigen in rein schematischer Darstellung weitere mögliche Ausgestaltungsformen der Halteeinrichtung 17. So zeigt Fig. 5 eine mit Bezug auf die Rekombinationseinrichtung 2 im wesentlichen konvex ausgebildete Halteeinrichtung 17, so daß das auf die Halteeinrichtung 17 abtropfende Wasser in Richtung des Stutzenelements 11 des Rekombinators 1 abfließen kann. Fig. 6 zeigt eine im wesentlichen trichterförmige Ausgestaltung der Halteeinrichtung 17, mittels der abtropfendes Wasser aufgefangen und über den Trichterhals zielgerichtet zum Stutzenelement 11 des Rekombinators 1 geführt werden kann. Eine weitere mögliche Ausgestaltungsform der Halteeinrichtung 17 zeigt in schematischer Darstellung Fig. 7. In dieser Ausgestaltungsform ist zwischen dem Sockel 3 und der den Sockel 3 tragenden Halteeinrichtung 17 ein Ringspalt belassen, über den auf die Halteeinrichtung 17 tropfendes Wasser abgeführt werden kann. Die Halteeinrichtung 17 und der Sockel 3 können beispielsweise durch in Fig. 7 nicht dargestellte Stege miteinander verbunden sein.

Es versteht sich von selbst, daß die in den Fign. 3 bis 7 gezeigten Ausführungsformen der Halteeinrichtung 17 nur exemplarisch sind. Erfindungswesentlich ist mit Blick auf die Ausgestaltung der Halteeinrichtung 17 allein, daß die Ansammlung von Wasser auf der Halteeinrichtung 17 vermieden wird, und zwar dadurch, daß die Halteeinrichtung 17 über Mittel zum Abführen von Wasser verfügt. Insofern sind die in den Fign. 3 bis 7 gezeigten Ausführungsformen lediglich exemplarisch, nicht aber beschränkend zu verstehen.

### Bezugiszeichenliste

- 1: Rekombinator
- 2: Rekombinationseinrichtung
- 3: Sockel
- 4: Volumenraum
- 5: Abschirmelement
- 6: Fortsatz
- 7: Rinne
- 8: Behälter
- 9: Verschlußkappe
- 10: Verschlußkappe
- 11: Stutzenelement
- 12: Pfeil
- 13: Wasser
- 14: Durchgangsbohrung
- 15: Anschlußstutzen
- 16: Höhenrichtung
- 17: Halteeinrichtung
- 18: Durchtrittsöffnung
- 19: Halter
- 20: Kappe
- 21: Steg

## Patentansprüche

1. Rekombinator mit einer Rekombinationseinrichtung (2) zur katalytischen Rekombination von in Akkumulatoren entstehendem Wasserstoff und Sauerstoff zu Wasser, wobei der Rekombinator einen Behälter (8) aufweist,
**gekennzeichnet durch**
ein oberhalb der Rekombinationseinrichtung (2) angeordnetes Abschirmelement (5), welches so zwischen der Rekombinationseinrichtung (2) und der in Höhenrichtung (16) darüber liegenden Behälterwand angeordnet ist, dass sich an der Behälterwand ausbildendes Wasser von dem Abschirmelement (5) abgefangen wird.

2. Rekombinator nach Anspruch 1, **dadurch gekennzeichnet, dass** das Abschirmelement (5) aus einem korrosionsbeständigen Material, vorzugsweise Keramik und/oder Kunststoff gebildet ist.

3. Rekombinator nach Anspruch 2, **dadurch gekennzeichnet, dass** das Abschirmelement als gasdurchlässige, aber flüssigkeitsundurchlässige Membran ausgebildet ist.

4. Rekombinator nach einem der vorhergehenden Ansprüche, **dadurch gekennzeichnet, dass** das Abschirmelement (5) Durchtrittsöffnugnen (14) aufweist.

5. Rekombinator nach einem der vorhergehenden Ansprüche, **dadurch gekennzeichnet, dass** das Abschirmelement (5) eine im Querschnitt bogenförmige Kontur aufweist.

6. Rekombinator nach einem der vorhergehenden Ansprüche, **dadurch gekennzeichnet, dass** das Abschirmelement (5) einen eine Wassersammelrinne (7) bildenden Fortsatz (6) aufweist.

7. Rekombinator nach einem der vorhergehenden Ansprüche, **dadurch gekennzeichnet, dass** das Abschirmelement (5) eine Heizeinrichtung trägt oder selbst beheizbar ist.

8. Rekombinator nach einem der vorhergehenden Ansprüche, **dadurch gekennzeichnet, dass** das Abschirmelement (5) oberseitig ein Vliesmaterial trägt.

9. Rekombinator nach einem der vorhergehenden Ansprüche, **dadurch gekennzeichnet, dass** das Abschirmelement (5) unter Gefälle zur Horizontalen ausgerichtet ist.

10. Rekombinator nach einem der vorhergehenden Ansprüche, **dadurch gekennzeichnet, dass** die Rekombinationseinrichtung (2) das Abschirmelement (5) trägt.

11. Rekombinator nach einem der vorhergehenden Ansprüche, **dadurch gekennzeichnet, dass** die Rekombinationseinrichtung (2) von wenigstens einer im Rekombinator (1) angeordneten Halteeinrichtung (17) getragen ist.

12. Rekombinator nach Anspruch 11, **dadurch gekennzeichnet, dass** die Halteeinrichtung (17) Mittel zum Abführen von Wasser aufweist.

13. Rekombinator nach einem der Ansprüche 11 bis 12, **dadurch gekennzeichnet, dass** die Halteeinrichtung (17) Durchtrittsöffnungen (18) zum Abführen von Wasser aufweist.

14. Rekombinator nach einem der Ansprüche 11 bis 13, **dadurch gekennzeichnet, dass** die Halteeinrichtung (17) aus einem hydrophoben Material, vorzugsweise Kunststoff, besteht.

## Claims

1. A recombiner comprising a recombination device (2) for the catalytic recombination of hydrogen and oxygen generated in accumulators to water, wherein the recombiner comprises a tank (8),
**characterized by**
a shielding element (5) arranged above the recombination device (2), which shielding element is located between the recombination device (2) and the tank wall which is placed above this one in the direction of height (16), such that water which develops on the tank wall will be intercepted by the shielding element (5).

2. A recombiner according to claim 1, **characterized in that** the shielding element (5) is made of a corrosion-resistant material, preferably ceramic and/or plastic.

3. A recombiner according to claim 2, **characterized in that** the shielding element is configured as a gas permeable but liquid impervious membrane.

4. A recombiner according to one of the preceding claims, **characterized in that** the shielding element (5) comprises openings (14).

5. A recombiner according to one of the preceding claims, **characterized in that** the cross section of the shielding element (5) comprises an arc-shaped contour.

6. A recombiner according to one of the preceding claims, **characterized in that** the shielding element (5) comprises a projection (6) which forms a water collecting channel (7).

7. A recombiner according to one of the preceding claims, **characterized in that** the shielding element (5) carries a heating device or can be heated itself.

8. A recombiner according to one of the preceding claims, **characterized in that** the shielding element carries a non-woven material on the upper side.

9. A recombiner according to one of the preceding claims, **characterized in that** the shielding element (5) is sloping towards the horizontal line.

10. A recombiner according to one of the preceding claims, **characterized in that** the recombination device (2) carries the shielding element (5).

11. A recombiner according to one of the preceding claims, **characterized in that** the recombination device (2) is carried by at least one holding device (17) arranged in the recombiner (1).

12. A recombiner according to claim 11, **characterized in that** the holding device (17) comprises means for evacuating water.

13. A recombiner according to one of the claims 11 through 12, **characterized in that** the holding device (17) comprises openings (18) for evacuating water.

14. A recombiner according to one of the claims 11 through 13, **characterized in that** the holding device (17) is made of a hydrophobic material, preferably plastic.

## Revendications

1. Recombineur comprenant un dispositif de recombinaison (2) pour recombiner de manière catalytique de l'hydrogène et de l'oxygène générés dans des accumulateurs pour former de l'eau, le recombineur comprenant un récipient (8),
**caractérisé par**
un élément de blindage (5) dispose au-dessus du dispositif de recombinaison (2), lequel élément de blindage est disposé entre le dispositif de recombinaison (2) et la paroi de récipient, qui est disposée au-dessus de celui-ci dans la direction de hauteur (16), de sorte que de l'eau qui se forme sur la paroi de récipient est interceptée par l'élément de blindage (5).

2. Recombineur selon la revendication 1, **caractérisé en ce que** l'élément de blindage (5) est fabriqué en un matériau résistant à la corrosion, de préférence en céramique et/ou en plastique.

3. Recombineur selon la revendication 2, **caractérisé en ce que** l'élément de blindage est conçu comme une membrane perméable aux gaz, mais imperméable aux liquides.

4. Recombineur selon l'une des revendications précédentes, **caractérisé en ce que** l'élément de blindage (5) comprend des ouvertures de passage (14).

5. Recombineur selon l'une des revendications précédentes, **caractérisé en ce que** la section transversale de l'élément de blindage (5) comprend un contour en forme d'arc.

6. Recombineur selon l'une des revendications précédentes, **caractérisé en ce que** l'élément de blindage (5) comprend un prolongement (6) formant une goulotte collectrice d'eau (7).

7. Recombineur selon l'une des revendications précédentes, **caractérisé en ce que** l'élément de blindage (5) porte un dispositif de chauffage ou peut être chauffé lui-même.

8. Recombineur selon l'une des revendications précédentes, **caractérisé en ce que** l'élément de blindage (5) porte un matériau non tissé sur sa face supérieure.

9. Recombineur selon l'une des revendications précédentes, **caractérisé en ce que** l'élément de blindage (5) est dirigé avec une pente vers la ligne horizontale.

10. Recombineur selon l'une des revendications précédentes, **caractérisé en ce que** le dispositif de recombinaison (2) porte l'élément de blindage (5).

11. Recombineur selon l'une des revendications précédentes, **caractérisé en ce que** le dispositif de recombinaison (2) est porté par au moins un dispositif de support (17) disposé dans le recombineur (1).

12. Recombineur selon la revendication 11, **caractérisé en ce que** le dispositif de support (17) comprend des moyens d'évacuation d'eau.

13. Recombineur selon l'une des revendications 11 à 12, **caractérisé en ce que** le dispositif de support (17) comprend des ouvertures de passage (18) pour évacuer de l'eau.

14. Recombineur selon l'une des revendications 11 à 13, **caractérisé en ce que** le dispositif de support (17) est fabriqué en un matériau hydrophobe, de préférence en plastique.
